# FASCICULE DE BREVET EUROPEEN

(11) **EP 2 203 913 B1**
(45) Date de publication et mention de la délivrance du brevet: **27.11.2013**
(21) Numéro de dépôt: 08843614.2
(22) Date de dépôt: 21.10.2008
(51) Int. Cl.: G08C 23/04, G08C 19/36, H04B 10/80

(54) **DISPOSITIF ELECTRIQUE A TELECOMMANDE SANS FIL ET A CONSOMMATION REDUITE**
ELEKTROGERÄT MIT FUNKFERNSTEUERUNG UND REDUZIERTEM STROMVERBRAUCH
ELECTRICAL DEVICE WITH WIRELESS REMOTE CONTROL AND REDUCED CONSUMPTION

(30) Priorité: 26.10.2007 FR 0707567
(43) Date de publication de la demande: 07.07.2010
(73) Titulaire: Legrand France, 87000 Limoges (FR); Legrand SNC, 87000 Limoges (FR)
(72) Inventeur: DORE, Pascal, 87000 Limoges (FR)
(74) Mandataire: Novagraaf Technologies
(86) Numéro de dépôt international: PCT/FR2008/051890
(87) Numéro de publication internationale: WO 2009/056721

(56) Documents cités:
- EP-A- 1 857 911
- WO-A-2004/064005
- FR-A- 2 890 508
- US-A1- 2003 178 554
- US-A1- 2007 124 615

## Description

L'invention concerne, de façon générale, les appareillages électriques.

Plus précisément, l'invention concerne un dispositif électrique comprenant une télécommande sans fil et un appareil électrique télécommandé, cet appareil comprenant lui-même une entrée d'énergie électrique, des organes principaux, un circuit de contact commandé, et un circuit de commande, les organes principaux étant conçus pour remplir une fonction de l'appareil électrique en contrepartie d'une consommation d'énergie électrique, le circuit de contact étant disposé entre l'entrée d'énergie électrique et les organes principaux et adoptant sélectivement un état ouvert dans lequel les organes principaux sont isolés de l'entrée d'énergie électrique et un état fermé dans lequel les organes principaux sont électriquement reliés à l'entrée d'énergie électrique, et le circuit de commande étant conçu pour produire sélectivement, en réponse à un signal de réveil transmis par la télécommande, un signal de changement d'état faisant passer le circuit de contact de l'état ouvert à l'état fermé.

Les dispositifs de ce type sont bien connus de l'homme du métier et comprennent notamment, parmi de nombreux autres exemples, les téléviseurs, les chaînes hi-fi, et les éclairages télécommandés.

Les circuits de commande de ces dispositifs comprennent traditionnellement des détecteurs qui ont pour fonction, au moins lorsque ces dispositifs sont en état de veille, de scruter en permanence l'arrivée de tout éventuel signal de réveil, et qui sont donc en permanence alimentés en énergie.

Ainsi, bien que ces circuits de commande ne disposent que d'une puissance électrique sensiblement inférieure à celle des organes principaux, l'énergie totale qu'ils consomment pendant les périodes de veille, qui sont souvent très longues par rapport aux périodes d'utilisation, peut être du même ordre de grandeur que l'énergie électrique consommée par les organes principaux en période de fonctionnement.

Un dispositif du type précédemment défini est par exemple décrit dans la demande de brevet US 2007/0124615.

Ce dispositif connu comprend des convertisseurs de courant continu servant à l'alimenter à partir d'une source de courant alternatif, une unité de commande susceptible d'être activée par un signal de télécommande, et un microprocesseur, les convertisseurs étant sélectivement mis en service par l'unité de commande, et le microprocesseur étant susceptible de remettre l'unité de commande dans un état de veille en désactivant les convertisseurs de courant continu.

On connaît également, par la demande de brevet FR 2 890 508, un dispositif de télécommande d'un composant optique actif, ce dispositif comportant des moyens locaux reliés au composant actif, un module de conversion d'énergie passif, et un organe interrupteur conçu pour être commandé par le module de conversion d'énergie.

Le dispositif connu de ce brevet FR 2 890 508, qui présente l'avantage de ne requérir qu'une consommation d'énergie très faible et de ne pas utiliser un réseau de distribution d'électricité, présente en contrepartie la spécificité de ne pas être adapté à un tel réseau.

Dans ce contexte, la présente invention a pour but de proposer un dispositif adapté à un réseau de distribution d'électricité et dont la consommation électrique en mode veille soit totalement négligeable.

A cette fin, le dispositif de l'invention, par ailleurs conforme à la définition générique qu'en donne le préambule ci-dessus, est essentiellement caractérisé en ce que la télécommande est conçue pour émettre, en tant que signal de réveil, une onde d'énergie collimatée, en ce que le circuit de commande comprend un transducteur d'énergie propre à produire directement le signal de changement d'état à partir de l'énergie du signal de réveil, en ce que le signal de changement d'état produit par le transducteur d'énergie est un signal électrique, en ce que le circuit de contact comprend un pont redresseur et au moins un transistor à effet de champ formant un premier composant adoptant sur commande au moins deux états de conduction différents, en ce que le pont redresseur comprend deux bornes de courant alternatif et deux bornes de courant redressé, et en ce que ledit transistor à effet de champ est branché entre les bornes de courant redressé du pont redresseur et court-circuite ces bornes de courant redressé à réception du signal de changement d'état.

L'entrée d'énergie électrique comprend typiquement une fiche conçue pour être branchée sur une prise d'un réseau d'alimentation en énergie électrique.

L'onde d'énergie collimatée peut être constituée par une onde électromagnétique, et par exemple par un faisceau lumineux, en particulier dans le domaine du visible.

De préférence, le transducteur d'énergie est constitué par un transducteur photoélectrique.

Les organes principaux incluent avantageusement une unité logique propre à gérer, après le passage du circuit de contact dans son état fermé, le maintien sélectif de ce circuit de contact dans cet état fermé.

Dans ce cas, il peut être judicieux de prévoir que le circuit de contact comprenne un deuxième composant à au moins deux états de conduction, ce deuxième composant étant branché, en parallèle du premier composant à au moins deux états de conduction, entre les bornes de courant redressé du pont redresseur, et l'unité logique étant reliée à ce deuxième composant à au moins deux états de conduction, dont elle contrôle l'état.

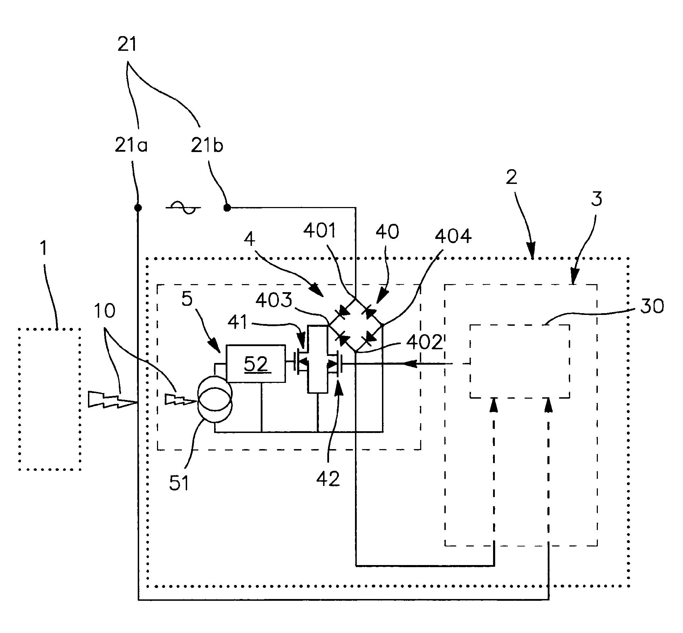

D'autres caractéristiques et avantages de l'invention ressortiront clairement de la description qui en est faite ci-après, à titre indicatif et nullement limitatif, en référence au dessin annexé dont l'unique figure est un schéma illustrant un mode de réalisation possible de l'invention.

Comme indiqué précédemment, l'invention concerne un dispositif électrique comprenant une télécommande sans fil 1 et un appareil électrique télécommandé 2.

L'appareil électrique 2 comprend principalement une entrée 21 d'énergie électrique, des organes principaux 3, un circuit de contact commandé 4, et un circuit de commande 5.

Typiquement, l'entrée d'énergie 21 comprend une fiche conçue pour être branchée sur une prise d'un réseau d'alimentation en énergie électrique, délivrant une tension alternative.

En fonctionnement, les organes principaux 3 se comportent en consommateurs de courant et remplissent corrélativement une fonction utile ou caractéristique de l'appareil électrique.

Un générateur haute tension dans un téléviseur à tube cathodique, un amplificateur dans une chaîne hi-fi, ou la résistance d'une ampoule dans un éclairage télécommandé constituent autant d'exemples possibles d'organes principaux 3.

Le circuit de contact 4, qui est disposé entre l'entrée d'énergie électrique 21 et les organes principaux 3, peut adopter sur commande un état ouvert dans lequel les organes principaux 3 sont isolés de l'entrée d'énergie électrique 21, et un état fermé dans lequel les organes principaux 3 sont électriquement reliés à cette entrée d'énergie électrique 21.

En réalité, comme l'entrée d'énergie électrique 21 est généralement bipolaire et comme l'un des pôles 21a de cette entrée constitue alors la référence de tension pour les organes principaux 3, il est possible de considérer que le circuit de contact 4 est interposé entre l'autre pôle 21b de cette entrée 21 et ces organes principaux 3.

Le circuit de commande 5 est conçu pour être sensible à un signal de réveil 10 émis par la télécommande 1 et pour produire, en réponse à ce signal de réveil, un signal de changement d'état qui fait passer le circuit de contact 4 de son état ouvert à son état fermé.

Selon l'invention, la télécommande 1 est conçue pour émettre, en tant que signal de réveil, une onde d'énergie collimatée 10, et le circuit de commande 5 comprend un transducteur d'énergie 51 qui est conçu pour produire directement le signal de changement d'état à partir de l'énergie du signal de réveil 10.

L'onde d'énergie collimatée 10 peut avantageusement être constituée par une onde électromagnétique.

En particulier, cette onde d'énergie collimatée 10 peut être constituée par un faisceau lumineux, par exemple dans le spectre visible, le signal de changement d'état produit par le transducteur d'énergie 51 étant constitué par un signal électrique.

Dans un mode de réalisation avantageux de l'invention, le transducteur d'énergie 51 peut ainsi être constitué par une cellule photoélectrique.

Le circuit de commande 5 peut aussi comprendre un filtre 52, propre à bloquer par exemple les signaux de changement d'état dont l'amplitude est inférieure à un seuil prédéterminé, de manière à éviter que le dispositif puisse être réveillé de façon intempestive par des ondes parasites.

Comme le montre la figure, le circuit de contact 4 comprend par exemple un pont redresseur 40 et au moins un premier composant, tel qu'un transistor à effet de champ 41, propre à adopter au moins deux états de conduction différents en réponse à un signal de commande à faible énergie.

Le pont redresseur 40 comprend de façon classique deux bornes de courant alternatif 401 et 402, et deux bornes de courant redressé 403 et 404.

Le premier composant 41 est physiquement branché entre les bornes 403 et 404 de courant redressé du pont 40, et court-circuite électriquement ces deux bornes à réception de tout signal de changement d'état ayant traversé le filtre 52.

De préférence, les organes principaux 3 incluent une unité logique 30 capable de gérer le maintien sélectif du circuit de contact 4 dans son état fermé dès que le dispositif a été réveillé, c'est-à-dire juste après le passage de ce circuit de contact 4 dans son état fermé.

Dans ce cas, le circuit de contact 4 comprend en outre un deuxième composant 42, propre à adopter au moins deux états de conduction différents en réponse à un signal de commande.

Ce deuxième composant à au moins deux états de conduction 42 est branché, en parallèle du premier composant 41, entre les bornes de courant redressé 403 et 404 du pont redresseur 40, et l'unité logique 30 est reliée à ce deuxième composant 42 à au moins deux états de conduction pour en contrôler l'état.

Après le réveil du dispositif, qui permet à l'unité logique 30 d'être alimentée électriquement, cette unité peut ainsi placer le deuxième composant 42 dans son état passant pour continuer à être alimentée.

Contrairement au premier composant 41, qui doit être capable d'adopter son état passant avec un apport d'énergie aussi faible que possible et qui est donc préférablement constitué par un composant électronique actif, le deuxième composant 42 est commandé pour adopter son état passant alors que l'unité logique 30 est déjà reliée à l'entrée d'énergie électrique 21, de sorte que ce deuxième composant 42 peut notamment être constitué par un relais électromécanique fonctionnant en tout ou rien.

L'unité logique 30 peut être programmée pour rester alimentée pendant une durée prédéterminée, par exemple dans l'attente d'un signal de télécommande codé classique éventuellement émis en plus du signal de réveil 10.

Les organes principaux 3 peuvent comprendre un bloc d'alimentation en courant continu (non représenté), lui-même alimenté en énergie électrique alternative par l'entrée 21 à travers le circuit de contact 4, et propre à délivrer une tension continue à d'autres éléments de l'ensemble 3.

## Revendications

1. Dispositif électrique comprenant une télécommande sans fil (1) et un appareil électrique télécommandé (2), cet appareil comprenant lui-même une entrée (21) d'énergie électrique, des organes principaux (3), un circuit de contact commandé (4), et un circuit de commande (5), les organes principaux (3) étant conçus pour remplir une fonction de l'appareil électrique en contrepartie d'une consommation d'énergie électrique, le circuit de contact (4) étant disposé entre l'entrée d'énergie électrique (21) et les organes principaux (3) et adoptant sélectivement un état ouvert dans lequel les organes principaux (3) sont isolés de l'entrée d'énergie électrique (21) et un état fermé dans lequel les organes principaux (3) sont électriquement reliés à l'entrée d'énergie électrique (21), et le circuit de commande (5) étant conçu pour produire sélectivement, en réponse à un signal de réveil transmis par la télécommande (1), un signal de changement d'état faisant passer le circuit de contact (4) de l'état ouvert à l'état fermé, **caractérisé en ce que** la télécommande (1) est conçue pour émettre, en tant que signal de réveil, une onde d'énergie collimatée (10), **en ce que** le circuit de commande (5) comprend un transducteur d'énergie (51) propre à produire directement le signal de changement d'état à partir de l'énergie du signal de réveil, **en ce que** le signal de changement d'état produit par le transducteur d'énergie (51) est un signal électrique, **en ce que** le circuit de contact (4) comprend un pont redresseur (40) et au moins un transistor à effet de champ formant un premier composant (41) adoptant sur commande au moins deux états de conduction différents, **en ce que** le pont redresseur (40) comprend deux bornes (401, 402) de courant alternatif et deux bornes (403, 404) de courant redressé, et **en ce que** ledit transistor à effet de champ est branché entre les bornes (403, 404) de courant redressé du pont redresseur (40) et court-circuite ces bornes (403, 404) de courant redressé à réception du signal de changement d'état.

2. Dispositif électrique suivant la revendication 1, **caractérisé en ce que** l'entrée d'énergie électrique (21) comprend une fiche conçue pour être branchée sur une prise d'un réseau d'alimentation en énergie électrique.

3. Dispositif suivant l'une quelconque des revendications précédentes, **caractérisé en ce que** l'onde d'énergie collimatée (10) est une onde électromagnétique.

4. Dispositif suivant la revendication 3, **caractérisé en ce que** l'onde d'énergie collimatée (10) est un faisceau lumineux.

5. Dispositif suivant l'une quelconque des revendications précédentes, **caractérisé en ce que** le transducteur d'énergie (51) est un transducteur photoélectrique.

6. Dispositif suivant l'une quelconque des revendications précédentes, **caractérisé en ce que** les organes principaux (3) incluent une unité logique (30) propre à gérer, après le passage du circuit de contact (4) dans son état fermé, le maintien sélectif de ce circuit de contact (4) dans cet état fermé.

7. Dispositif suivant la revendication 6, **caractérisé en ce que** le circuit de contact (4) comprend un deuxième composant (42) à au moins deux états de conduction, ce deuxième composant (42) étant branché, en parallèle du premier composant (41) à au moins deux états de conduction, entre les bornes (403, 404) de courant redressé du pont redresseur (40), et **en ce que** l'unité logique (30) est reliée à ce deuxième composant à au moins deux états de conduction (42) dont elle contrôle l'état.

## Patentansprüche

1. Elektrische Vorrichtung umfassend eine schnurlose Fernbedienung (1) und ein fernbedientes Elektrogerät (2), wobei dieses Gerät selbst einen Eingang (21) für elektrische Energie, Hauptorgane (3), einen gesteuerten Kontaktschaltkreis (4) und einen Steuerschaltkreis (5) umfasst, wobei die Hauptorgane (3) dafür konzipiert sind, eine Funktion des Elektrogeräts als Gegenleistung zu einem Verbrauch von elektrischer Energie zu erfüllen, wobei der Kontaktschaltkreis (4) zwischen dem Eingang für elektrische Energie (21) und den Hauptorganen (3) angeordnet ist und wahlweise einen offenen Zustand annimmt, in dem die Hauptorgane (3) elektrisch mit dem Eingang für elektrische Energie (21) verbunden sind und der Steuerschaltkreis (5) so konzipiert ist, dass er wahlweise in Reaktion auf ein von der Fernbedingung (1) übermitteltes Aufwecksignal ein Signal zur Zustandsänderung erzeugt, bei der der Kontaktschaltkreis (4) vom offenen Zustand in den geschlossenen Zustand übergeht, **dadurch gekennzeichnet, dass** die Fernbedienung (1) so konzipiert ist, dass sie als Aufwecksignal eine kollimatierte Energiewelle (10) sendet, dass der Steuerschaltkreis (5) einen Energiewandler (51) umfasst, der geeignet ist, ausgehend von der Energie des Aufwecksignals direkt das Signal für die Zustandsänderung zu erzeugen, dass das vom Energiewandler (51) erzeugte Signal für die Zustandsänderung ein elektrisches Signal ist, dass der Kontaktschaltkreis (4) eine Gleichrichterbrücke (40) und zumindest einen Feldeffekt-Transistor umfasst, der eine erste Komponente (41) bildet, die bei Steuerung zumindest zwei unterschiedliche Leitzustände annimmt, dass die Gleichrichterbrücke (40) zwei Klemmen (401, 402) für Wechselstrom und zwei Klemmen (403, 404) für gleichgerichteten Strom umfasst, und dass der besagte Feldeffekt-Transistor zwischen den Klemmen (403, 404) für gleichgerichteten Strom der Gleichrichterbrücke (40) angeschlossen ist und diese Klemmen (403, 404) für gleichgerichteten Strom bei Empfang des Signals für die Zustandsänderung kurzschließt.

2. Elektrische Vorrichtung nach Anspruch 1, **dadurch gekennzeichnet, dass** der Eingang (21) für elektrische Energie einen Stecker umfasst, der dafür konzipiert ist, dass er an eine Steckdose eines Versorgungsnetzes für elektrische Energie angeschlossen wird.

3. Elektrische Vorrichtung nach einem beliebigen der vorstehenden Ansprüche, **dadurch gekennzeichnet, dass** die kollimatierte Energiewelle (10) eine elektromagnetische Welle ist.

4. Elektrische Vorrichtung nach Anspruch 3, **dadurch gekennzeichnet, dass** die kollimatierte Energiewelle (10) ein Lichtbündel ist.

5. Vorrichtung nach einem beliebigen der vorstehenden Ansprüche, **dadurch gekennzeichnet, dass** der Energiewandler (51) ein photoelektrischer Wandler ist.

6. Vorrichtung nach einem beliebigen der vorstehenden Ansprüche, **dadurch gekennzeichnet, dass** die Hauptorgane (3) eine logische Einheit (30) einschließen, die nach dem Übergang des Kontaktschaltkreises (4) in seinen geschlossenen Zustand selbst die wahlweise Beibehaltung dieses Kontaktschaltkreises (4) in diesem geschlossenen Zustand verwalten kann.

7. Vorrichtung nach Anspruch 6, **dadurch gekennzeichnet, dass** der Kontaktschaltkreis (4) eine zweite Komponente (42) mit zumindest zwei Leitzuständen umfasst, wobei diese zweite Komponente (42) parallel zur ersten Komponente (41) mit zumindest zwei Leitzuständen zwischen den Klemmen (403, 404) für gleichgerichteten Strom der Gleichrichterbrücke (40) angeschlossen ist, und dass die logische Einheit (30) mit dieser zweiten Komponente mit zumindest zwei Leitzuständen (42) verbunden ist, deren Zustand sie kontrolliert.

## Claims

1. An electrical device comprising a wireless remote control (1) and a remotely controlled electrical apparatus (2), this apparatus itself comprising an electrical power input (21), main members (3), a controllable contact circuit (4), and a control circuit (5), the main members (3) being designed to fulfill a function of the electrical apparatus in exchange for a consumption of electrical power, the contact circuit (4) being arranged between the electrical power input (21) and the main members (3) and selectively adopting an open state wherein the main members (3) are isolated from the electrical power input (21) and a closed state wherein the main members (3) are electrically connected to the electrical power input (21), and the control circuit (5), being designed to selectively generate, in response to a wake-up signal transmitted by the remote control (1), a change of state signal making the contact circuit (4) switch from the open state to the closed state, **characterized in that** the remote control (1) is designed to transmit, as a wake-up signal, a collimated energy wave (10), **in that** the control circuit (5) comprises an energy transducer (51) adapted to directly produce the change-of-state signal from the energy of the wake-up signal, **in that** the change-of-state signal produced by the energy transducer (51) is an electric signal, **in that** the contact circuit (4) comprises a rectifier bridge (40) and at least a field effect transistor forming a first component (41) that adopts on demand at least two different conduction states, **in that** the rectifier bridge (40) comprises two terminals (401, 402) of alternative current and two terminals (403, 404) of rectified current, and **in that** said field effect transistor is plugged between the terminals (403, 404) of rectified current of the rectifier bridge (40) and short-circuits these terminals (403, 404) of rectified current upon receiving the change-of-state signal.

2. The electrical device according to claim 1, **characterized in that** the electrical power input (21) comprises a plug designed to be plugged into a socket of an electrical power supply network.

3. The device according to any one of the preceding claims, **characterized in that** the collimated energy wave (10) is an electromagnetic wave.

4. The device according to claim 3, **characterized in that** the collimated energy wave (10) is a light beam.

5. The device according to any one of the preceding claims, **characterized in that** the energy transducer (51) is a photoelectric transducer.

6. The device according to any one of the preceding claims, **characterized in that** the main members (3) include a logic unit (30) adapted to manage, after the contact circuit (4) switches to its closed state, the selective keeping of this contact circuit (4) in this closed state.

7. The device according to claim 6, **characterized in that** the contact circuit (4) comprises a second component (42) with at least two conduction states, this second component (42) being connected, in parallel with the first component (41) to at least two conduction states, between the terminals (403, 404) of rectified current of the rectifier bridge (40), and **in that** the logic unit (30) is connected to this second component to at least two conduction states (42) whereof it controls the state.
